# FASCICULE DE BREVET EUROPEEN

(11) **EP 3 312 391 B1**
(45) Date de publication et mention de la délivrance du brevet: **15.04.2020**
(21) Numéro de dépôt: 17195610.5
(22) Date de dépôt: 10.10.2017
(51) Int. Cl.: F01D 25/02, F02K 3/02, F02C 7/047

(54) **BEC DÉGIVRANT DE COMPRESSEUR DE TURBOMACHINE AXIALE**
ENTEISUNGSEINLASS EINES KOMPRESSORS EINER AXIALEN TURBOMASCHINE
DEICING INLET OF AN AXIAL TURBINE ENGINE COMPRESSOR

(30) Priorité: 21.10.2016 BE 201605795
(43) Date de publication de la demande: 25.04.2018
(73) Titulaire: Safran Aero Boosters SA, 4041 Herstal (BE)
(72) Inventeur: DE VRIENDT, Olivier, 4690 Bassenge (BE); SCHUSTER, Laurent, 6997 Erezee (BE)
(74) Mandataire: Lecomte & Partners

(56) Documents cités:
- DE-A1-102007 029 797
- FR-A1- 3 004 485
- US-A1- 2003 035 719
- US-B2- 8 011 172

## Description

### Domaine technique

L'invention se rapporte au domaine du dégivrage d'un bec de séparation d'une turbomachine axiale. Plus précisément, l'invention concerne un bec de séparation à dégivrage par gaz chaud pour turbomachine axiale. L'invention a également trait à une turbomachine axiale, notamment un turboréacteur d'avion ou un turbopropulseur d'aéronef. L'invention propose également un procédé de dégivrage d'un bec de séparation.

### Technique antérieure

Un turboréacteur comprend typiquement une entrée se divisant en une veine primaire et en une veine secondaire, de manière à canaliser le flux primaire et le flux secondaire respectivement. Cette séparation annulaire s'effectue au moyen d'un bec de séparation qui partage le flux entrant selon des proportions prédéfinies afin de garantir un certain rendement, et une poussée donnée, en fonction des conditions de fonctionnement.

Or, ces mêmes conditions de fonctionnement peuvent s'avérer givrantes ; c'est-à-dire que du givre peut se former à l'intérieur du turboréacteur. En particulier, une couche de givre peut recouvrir le bec de séparation lui-même, et s'étendre jusqu'aux aubes du redresseur logé dans ce bec de séparation. Dans des cas extrêmes, l'accumulation de givre peut boucher les espaces entre les aubes voisines si bien que l'entrée dans la veine primaire devient totalement obstruée. Le moteur se coupe.

En réponse à ce risque, il est courant d'associer un système dégivrant au bec de dégivrage. Ce système peut injecter un flux d'air chaud en direction des aubes afin d'y faire fondre une formation de givre lorsqu'une accumulation de glace apparait.

Le document US 8 011 172 B2 divulgue un turboréacteur double flux avec bec de séparation lié à un redresseur. Le bec de séparation est équipé d'un système de dégivrage alimenté en air chaud provenant du compresseur haute pression. Cet air chaud est dirigé dans le flux primaire A de manière à être entraîné par ce dernier. Chaque jet d'air chaud dégivrant atteint une zone d'impact d'aube qui est effectivement dégivrée. Toutefois, l'efficacité de ce système de dégivrage reste limitée puisqu'un dépôt de givre peut malgré tout se former sur l'aube autour de la zone d'impact. En particulier lorsque l'inclinaison de la corde de l'aube devient plus prononcée, la surface extrados ne peut être traitée directement par le jet d'air.

Le document FR 3 004 485 A1 divulgue le préambule de la revendication 1.

Le document US 2003/0035719 A1 montre un autre exemple de bec de séparation avec des moyens de dégivrage.

### Résumé de l'invention

### Problème technique

L'invention a pour objectif de résoudre au moins un des problèmes posés par l'art antérieur. Plus précisément, l'invention a pour objectif d'améliorer l'efficacité d'un système dégivrant de bec de séparation. L'invention a également pour objectif de proposer une solution simple, résistante, légère, économique, fiable, facile à produire, commode d'entretien, d'inspection aisée, et améliorant le rendement.

### Solution technique

L'invention a pour objet un bec de séparation dégivrant de turbomachine axiale avec un axe de rotation, selon les caractéristiques de la revendication 1, notamment un bec de séparation dégivrant de compresseur de turbomachine axiale, le bec de séparation comprenant : une aube avec un bord d'attaque s'étendent radialement, et un système de dégivrage avec un orifice d'injection d'un fluide dégivrant selon une direction d'injection, remarquable en ce que la direction d'injection de l'orifice d'injection est inclinée vers l'amont d'un angle compris entre 0 et 10° par rapport au bord d 'attaque de l'aube afin de le dégivrer.

Selon un mode avantageux de l'invention, la direction d'injection est généralement perpendiculaire à l'axe de rotation de la turbomachine.

Selon un mode avantageux de l'invention, le bord d'attaque présente une courbure dans un plan perpendiculaire à l'axe rotation.

Selon un mode avantageux de l'invention, le bord d'attaque, et éventuellement sa droite moyenne, est sensiblement incliné par rapport à la direction radiale, par exemple dans un plan perpendiculaire à l'axe de rotation et/ou dans un plan contenant l'axe de rotation.

Selon un mode avantageux de l'invention, le bord d'attaque comprend une extrémité externe, la direction d'injection étant sensiblement parallèle au bord d'attaque au niveau radialement de ladite extrémité externe.

Selon un mode avantageux de l'invention, l'orifice d'injection est sensiblement disposé au niveau axialement du bord d'attaque.

Selon un mode avantageux de l'invention, le système de dégivrage est configuré pour injecter le fluide dégivrant de manière discontinue.

Selon un mode avantageux de l'invention, le système de dégivrage est configuré pour modifier la température du fluide dégivrant.

Selon un mode avantageux de l'invention, le système de dégivrage est configuré pour modifier la pression d'alimentation du fluide dégivrant.

Selon un mode avantageux de l'invention, le système de dégivrage comprend une pompe, notamment une pompe additionnelle, par exemple une pompe volumétrique, pour augmenter la pression d'injection du fluide dégivrant.

Selon un mode avantageux de l'invention, le système de dégivrage comprend au moins une vanne pilotant l'alimentation du fluide dégivrant via l'orifice d'injection.

Selon un mode avantageux de l'invention, le bec comprend une paroi avec une surépaisseur radiale dans laquelle est formé l'orifice d'injection.

Selon un mode avantageux de l'invention, le système comprend un module de détection de givre au niveau du bord d'attaque, le système étant configuré pour fournir du fluide dégivrant en cas de détection de givre au niveau du bord d'attaque.

Selon un mode avantageux de l'invention, le bec de séparation comprend un bord de séparation circulaire formé sur une surépaisseur circulaire disposée en amont de l'orifice d'injection.

Selon un mode avantageux de l'invention, suivant la circonférence, l'orifice d'injection est disposé au niveau du bord d'attaque.

Selon un mode avantageux de l'invention, l'orifice d'injection est disposé radialement à l'extrémité externe du bord d'attaque.

Selon un mode avantageux de l'invention, l'orifice comprend une embouchure sensiblement en regard de l'amont.

Selon un mode avantageux de l'invention, l'orifice d'injection est formé, notamment entouré, par une portion monobloc du bec de séparation, notamment par une pièce formant une paroi annulaire interne du bec de séparation.

Selon un mode avantageux de l'invention, l'injection est effectuée par pulsations répétées, notamment à une fréquence donnée.

Selon un mode avantageux de l'invention, la direction d'injection est mesurée dans l'orifice.

Selon un mode avantageux de l'invention, l'inclinaison entre la droite moyenne et la direction d'injection est inférieure ou égale à 3°.

Selon un mode avantageux de l'invention, l'inclinaison entre l'axe de rotation et la direction d'injection est supérieure ou égale à : 60°, ou 70°, ou 80°, ou 85°. Selon un mode avantageux de l'invention, l'axe de rotation forme un axe de symétrie du bec de séparation.

L'invention a également pour objet une turbomachine, comprenant un bec de séparation dégivrant, remarquable en ce que le bec de séparation dégivrant est conforme à l'invention, préférentiellement la turbomachine est un turboréacteur avec une soufflante carénée et/ou une soufflante ouverte.

Selon un mode avantageux de l'invention, la turbomachine comprend une rangée annulaire d'aubes présentant chacune un bord d'attaque, le système de dégivrage comprenant une rangée annulaire d'orifices d'injection de fluide dégivrant selon une direction d'injection respective, chaque orifice d'injection étant associée à un bord d'attaque auquel sa direction d'injection est parallèle afin de le dégivrer.

Selon un mode avantageux de l'invention, la turbomachine elle comprend un compresseur amont, notamment un compresseur basse pression, ledit compresseur comprenant une entrée formée par le bec de séparation dégivrant.

Selon un mode avantageux de l'invention, la turbomachine comprend un deuxième compresseur, notamment un compresseur haute pression, le système de dégivrage comprenant une ouverture de prélèvement en air chaud afin d'alimenter l'orifice d'injection.

L'invention a également pour objet un procédé selon les étapes de la revendication 15 de dégivrage d'un bec de séparation dégivrant de turbomachine axiale avec un axe de rotation, notamment un bec de séparation dégivrant de compresseur de turboréacteur, le bec de séparation comprenant : une aube avec un bord d'attaque s'étendent radialement, et un système de dégivrage avec un orifice d'injection d'un fluide dégivrant, le procédé comprenant une étape (a) détection d'une présence de givre, remarquable en ce que le procédé comprend une étape (b) injection d'un fluide dégivrant selon une direction d'injection le long du bord d'attaque (36) de l'aube (26) afin de le dégivrer, le bec de séparation étant éventuellement conforme à l'un des modes de réalisation décrits ci-dessus.

De manière générale, les modes avantageux de chaque objet de l'invention sont également applicables aux autres objets de l'invention. Dans la mesure du possible, chaque objet de l'invention est combinable aux autres objets. Les objets de l'invention sont également combinables aux modes de réalisation de la description, qui en plus sont combinables entre eux. Les caractéristiques relatives à l'aube du bec de dégivrage peuvent s'appliquer à chaque aube de la rangée d'aubes. De même, les caractéristiques à l'orifice d'injection peuvent s'appliquer à chacun des orifices d'injection de la rangée d'orifices d'injection.

### Avantages apportés

L'invention permet d'injecter un flux dégivrant le long du bord d'attaque de l'aube traitée. Ceci permet de traiter davantage la hauteur radiale de l'aube, et en particulier d'agir depuis une extrémité d'aube. En complément, l'orientation du flux permet de traiter la surface intrados de l'aube comme sa surface extrados dans la mesure où le fluide injecté est distribué par le bord d'attaque.

### Brève description des dessins

La figure 1 représente une turbomachine axiale selon l'invention.
La figure 2 est un schéma d'un compresseur de turbomachine selon l'invention.
La figure 3 illustre un bec de séparation dégivrant selon l'invention.

### Description des modes de réalisation

Dans la description qui va suivre, les termes interne et externe renvoient à un positionnement par rapport à l'axe de rotation d'une turbomachine axiale. La direction axiale correspond à la direction le long de l'axe de rotation de la turbomachine et/ou l'axe de symétrie du bec de séparation. Naturellement, ces axes peuvent coïncider. La direction radiale est perpendiculaire à l'axe de rotation et/ou à l'axe de symétrie. L'amont et l'aval sont en référence au sens d'écoulement principal du flux dans la turbomachine.

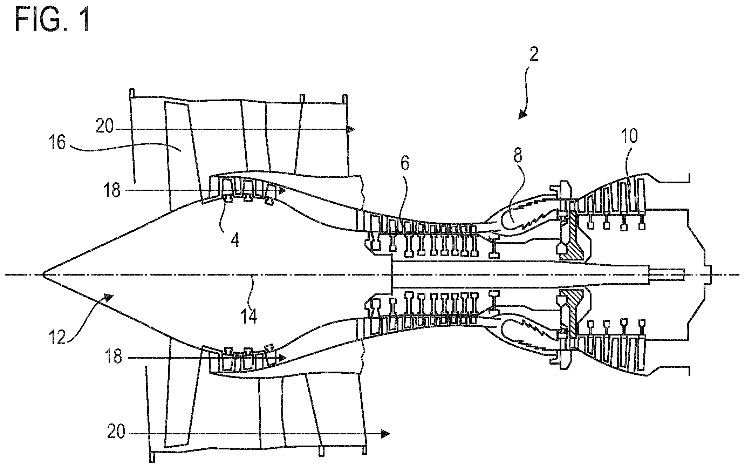

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction de poussée. Les flux primaire 18 et secondaire 20 sont des flux annulaires radialement concentriques. Ils sont canalisés par le carter de la turbomachine et/ou des viroles. A cet effet, le carter présente des parois cylindriques internes et externes.

Le turboréacteur peut être à soufflante carénée dans la nacelle, ou à une soufflante ouverte. Une telle soufflante est disposée autour du carénage du turboréacteur, soit autour de la nacelle. Une telle soufflante est également connue sous l'expression anglo-saxonne « open rotor ».

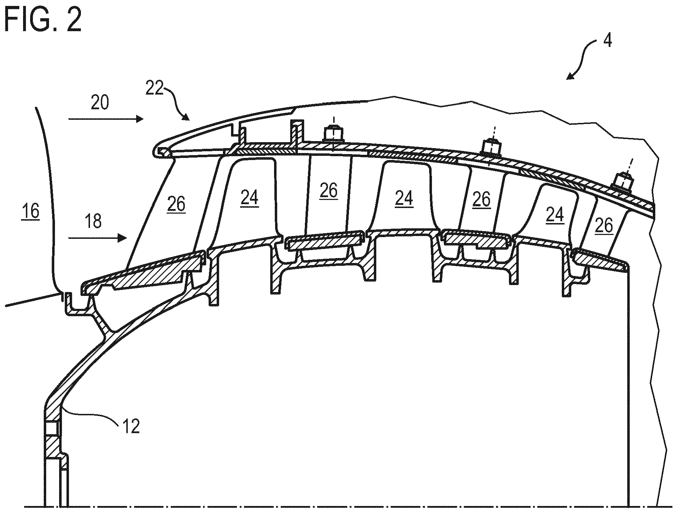

La figure 2 est une vue en coupe d'un compresseur d'une turbomachine axiale telle que celle de la figure 1. Le compresseur peut être un compresseur basse-pression 4. On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Le compresseur basse pression 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression statique.

Les aubes statoriques 26 s'étendent essentiellement radialement depuis un carter extérieur, et peuvent y être fixées et immobilisées à l'aide d'axes. Au sein d'une même rangée, les aubes statoriques 26 sont régulièrement espacés les unes des autres, et présentent une même orientation angulaire dans le flux. Avantageusement, les aubes d'une même rangée sont identiques. Optionnellement, l'espacement entre les aubes peut varier localement tout comme leurs orientations angulaires. Certaines aubes peuvent différer du reste des aubes de leur rangée. Le carter peut être formé de plusieurs anneaux, ou de demi-coquilles.

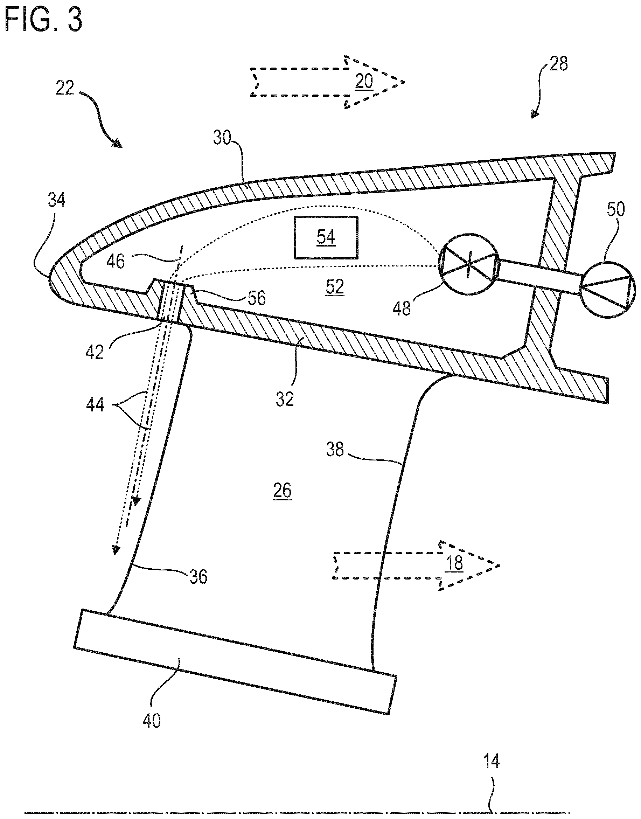

La figure 3 représente un agrandissement du bec de séparation 22 tel que celui de la figure 2.

Le bec de séparation 22 est rendu dégivrant par l'ajout d'un système de dégivrage 28. Ce système de dégivrage peut fonctionner grâce à un agent dégivrant, par exemple un gaz chaud prélevé dans la partie aval du compresseur haute pression. Ou encore, ce fluide dégivrant peut être un liquide dont les propriétés physico-chimiques permettent de dissoudre du givre formé dans le bec de séparation.

Le bec de séparation 22 comprend une paroi annulaire externe 30 et une paroi annulaire interne 32, telle une virole externe. Il montre également une surface annulaire de séparation en amont, qui délimite le flux primaire 18 et le flux secondaire 20. En particulier, le bord de séparation 34 circulaire est l'interface qui définit les proportions entre le flux primaire 18 et le flux secondaire 20. De plus, le bord séparation 34 peut être matérialisé sur un épaississement qui forme une jonction ciculaire entre les parois (30 ; 32). Il peut être le bord circulaire amont du bec 22, qui tranche circulairement le flux entrant dans la turbomachine. Par ailleurs, le bec de séparation 22 supporte une rangée annulaire d'aubes statoriques 26 via sa virole externe. Ces aubes statoriques 26 peuvent former le redresseur d'entrée du compresseur. Bien qu'une seule aube 26 ne soit visible, la présente description peut valoir pour chacune des aubes 26 de la rangée annulaire.

L'aube 26 s'étend radialement depuis la paroi interne 32 vers l'intérieur. Elle comprend un bord d'attaque 36 et un bord de fuite 38. En outre, elle montre une surface intrados et une surface extrados qui s'étendent du bord d'attaque au bord de fuite. Ces surfaces comme le bord d'attaque 36 ou de fuite 38 s'étendent depuis la paroi interne 32, et éventuellement jusqu'à une optionnelle virole interne 40.

Le système de dégivrage 28 présente une pluralité d'orifices d'injection 42 de fluide dégivrant 44 qui sont disposées en cercle autour de l'axe de rotation 14. Bien qu'un seul orifice d'injection 42 ne soit représenté, le présent enseignement peut s'appliquer à chacun des orifices d'injection 42 de la rangée. Chaque orifice d'injection 42 peut être associé à une aube 26 de manière à former un couple. Chaque couple peut être identique. L'orifice d'injection 42 peut être allongé selon une direction principale, éventuellement radialement, de manière à guider le fluide dégivrant 44. Son embouchure peut être tournée vers l'amont. L'orifice d'injection 42 peut être allongé selon une direction d'injection 46 qui lui est propre. De manière avantageuse, la direction d'injection 46 est généralement parallèle au bord d'attaque 36 de l'aube 26 qui lui est associé.

L'orifice d'injection 42 peut être sensiblement disposé en amont de l'aube 26, par exemple radialement niveau de son extrémité externe, également appelée tête d'aube. L'orifice d'injection 42 peut éventuellement être placé axialement le long du bord d'attaque 36, par exemple lorsque celle-ci est inclinée vers l'avant et/ou selon la circonférence. En fonctionnement, le fluide dégivrant 44 est rabattu contre l'aube 26 par le flux primaire 18, et en particulier contre le bord d'attaque 36 afin de le dégivrer. Ainsi, le jet de fluide dégivrant 44 épouse le bord d'attaque 36 afin de le dégivrer plus efficacement. Le bord d'attaque 36 peut être dégivré sur une longueur radiale plus importante. Aussi, puisque le bord d'attaque 36 de l'aube a pour vocation de couper le fluide dégivrant 44, il parvient à le distribuer sur la face intrados et la surface extrados qu'il précède. L'orientation dans l'espace de la direction d'injection 46 peut être optimisée. Elle peut être essentiellement orthogonale à l'axe de rotation 14 de la turbomachine. Ainsi, le fluide dégivrant 44 suit plus le bord d'attaque 36 qu'il ne s'écoule vers l'aval avant de rencontrer l'aube 26. Pour s'adapter à l'entraînement du flux primaire 18 et/ou pour suivre le bord d'attaque 36, la direction d'injection peut être basculée vers l'amont.

Plus précisément, le bord d'attaque 36 de l'aube 26 montre dans l'espace une droite moyenne. Il peut s'agir d'une moyenne géométrique dans l'espace, ou éventuellement d'une droite reliant les extrémités radiales du bord d'attaque 36. Dès lors, la direction d'injection 46 pourra être parallèle à ladite droite moyenne. Ainsi, elle pourra suivre l'éventuelle courbure du bord d'attaque 36, que ce dernier soit marqué dans un plan perpendiculaire à l'axe rotation, et/ou dans un plan axial comprenant l'axe de rotation 14. De manière analogue, la direction d'injection 46 parviendra également à suivre l'éventuelle inclinaison du bord d'attaque 36 dans les plans précités. Selon une certaine approche, il peut être prévu que la direction d'injection 46 et/ou l'orifice d'injection 42 affleure le bord d'attaque 36 à sa racine externe, soit son extrémité en tête d'aube.

Le système de dégivrage 28 est configuré pour injecter le fluide dégivrant 44 par alternance, soit en discontinue. Ce résultat peut être produit par différents équipements. Par exemple, il peut comprendre une vanne pilotée 48 et/ou une pompe additionnelle 50, c'est-à-dire en plus du compresseur d'où est prélevé le fluide dégivrant 44. La vanne 48 permet d'ouvrir et couper la circulation du fluide dégivrant 44 qui transite via le plénum 52 formé entre la paroi externe 30 et la paroi interne 32. La pompe 50 parvient à augmenter la pression et/ou la vitesse d'injection du fluide dégivrant 44 de manière à ce qu'il couvre une longueur plus longue du bord d'attaque 36. Ceci augmente l'efficacité du système de dégivrage 28 et offre davantage de sécurité de fonctionnement pour la turbomachine.

Encore dans une optique de sécurité et d'efficacité, le système de dégivrage 28 peut comprendre des éléments chauffants 54 afin d'augmenter encore la température du fluide dégivrant 44. Il peut s'agir d'éléments électriques. Ils peuvent augmenter la température de prélèvement depuis le compresseur haute pression. Ces éléments chauffants 54 peuvent être placés dans le plénum 52 ou en dehors et en aval.

L'orifice d'injection 42 peut traverser la paroi interne 32. Il peut être formé dans une surépaisseur radiale 56, ce qui permet de mieux orienter le fluide dégivrant 44 et de mieux suivre la direction d'injection 46 cible. Chaque surépaisseur radiale 56 peut faire saillie dans le plenum 52.

Le système de dégivrage 28 peut agir en fonction d'une présence de givre. Dans cette optique il peut comprendre un module de détection de givre (non représenté), qui permet de détecter la formation de givre dans le bec de séparation 22. La détection peut être optique. Elle peut déceler une présence de givre au niveau du bord d'attaque 36, sur une surface intrados et sur la surface extrados. La détection peut également surveiller les viroles ; interne comme externe. Ce système peut contrôler les accumulations de glace dans les passages définis entre les aubes 26. Suite à une détection de givre par le module de détection, le système de dégivrage 28 fourni du fluide dégivrant 44, par exemple en ouvrant la vanne pilotée 48 et en actionnant la pompe additionnelle 50.

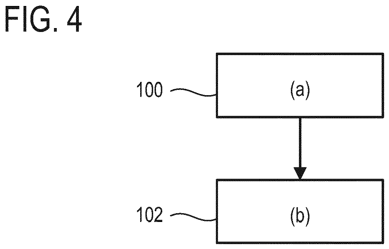

La figure 4 représente un diagramme du procédé de dégivrage d'un bec de séparation. Le bec de séparation peut être identique à celui évoqué dans les figures précédentes.

Le procédé peut comprendre les étapes suivantes :
(a) détection 100 d'une présence de givre et/ou détection de condition givrante,
(b) injection 102 d'un fluide dégivrant selon une direction d'injection le long du bord d'attaque de l'aube afin de le dégivrer.

Lors de l'étape (b) injection 102, le fluide dégivrant lèche le bord d'attaque de l'aube. Il peut envelopper le bord d'attaque. Le contact entre le fluide dégivrant peut alors s'étendre radialement sur au moins : 5%, ou 10%, ou 20% du bord d'attaque.

## Revendications

1. Bec de séparation (22) dégivrant de turbomachine axiale (2), le bec ayant un axe de symétrie, notamment un bec de séparation (22) dégivrant de compresseur (4) de turbomachine axiale (2), le bec de séparation (22) comprenant :
une aube (26) avec un bord d'attaque (36) s'étendant radialement, le bord d'attaque comprenant une droite moyenne, et
un système de dégivrage (28) avec un orifice d'injection (42) d'un fluide dégivrant (44) selon une direction d'injection (46),
**caractérisé en ce que**
la direction d'injection (46) de l'orifice d'injection (42) est inclinée vers l'amont d'un angle compris entre 0 et 10° par rapport à la droite moyenne du bord d'attaque (36) de l'aube (26) afin de le dégivrer.

2. Bec de séparation (22) selon la revendication 1, **caractérisé en ce que** l'angle est compris entre 0° et 3°.

3. Bec de séparation (22) selon l'une des revendications 1 ou 2, **caractérisé en ce que** le bord d'attaque (36) comprend une extrémité externe, la direction d'injection (46) étant sensiblement parallèle au bord d'attaque (36) au niveau radialement de ladite extrémité externe.

4. Bec de séparation (22) selon l'une des revendications 1 à 3, **caractérisé en ce que** le système de dégivrage (28) est configuré pour injecter le fluide dégivrant (44) de manière discontinue.

5. Bec de séparation (22) selon l'une des revendications 1 à 4, **caractérisé en ce que** le système de dégivrage (28) est configuré pour modifier la température du fluide dégivrant (44).

6. Bec de séparation (22) selon l'une des revendications 1 à 5, **caractérisé en ce que** le système de dégivrage (28) est configuré pour modifier la pression d'alimentation du fluide dégivrant (44) et/ou comprend une pompe, notamment une pompe additionnelle (50) pour augmenter la pression d'injection du fluide dégivrant (44).

7. Bec de séparation (22) selon l'une des revendications 1 à 6, **caractérisé en ce que** le système de dégivrage (28) comprend au moins une vanne (48) pilotant l'alimentation du fluide dégivrant (44) via l'orifice d'injection (42).

8. Bec de séparation (22) selon l'une des revendications 1 à 7, **caractérisé en ce qu'**il comprend une paroi (32) avec une surépaisseur radiale (56) dans laquelle est formé l'orifice d'injection (42).

9. Bec de séparation (22) selon l'une des revendications 1 à 8, **caractérisé en ce que** le système (28) comprend un module de détection de givre au niveau du bord d'attaque (36), le système (28) étant configuré pour fournir du fluide dégivrant (44) en cas de détection de givre au niveau du bord d'attaque (36).

10. Turbomachine (2) comprenant un bec de séparation (22) dégivrant, **caractérisée en ce que** le bec de séparation (22) dégivrant est conforme à l'une des revendications 1 à 9, préférentiellement la turbomachine (2) est un turboréacteur avec une soufflante (16) carénée et/ou une soufflante ouverte.

11. Turbomachine (2) selon la revendication 10, **caractérisée en ce que** la direction d'injection (46) est perpendiculaire à l'axe de rotation (14) de la turbomachine (2).

12. Turbomachine (2) selon la revendication 10 ou 11, **caractérisée en ce que** le bord d'attaque (36) est sensiblement incliné par rapport à la direction radiale, par exemple dans un plan perpendiculaire à l'axe de rotation (14) et/ou dans un plan contenant l'axe de rotation (14).

13. Turbomachine (2) selon l'une des revendications 10 à 12, **caractérisée en ce qu'**elle comprend une rangée annulaire d'aubes (26) présentant chacune un bord d'attaque (36), le système de dégivrage (28) comprenant une rangée annulaire d'orifices d'injection (42) de fluide dégivrant (44) selon une direction d'injection (46) respective, chaque orifice d'injection (42) étant associée à un bord d'attaque (36) auquel sa direction d'injection (46) est parallèle afin de le dégivrer.

14. Turbomachine (2) selon l'une des revendications 10 à 13, **caractérisée en ce qu'**elle comprend un compresseur amont, notamment un compresseur basse pression (4), ledit compresseur (4) comprenant une entrée formée par le bec de séparation (22) dégivrant.

15. Procédé de dégivrage d'un bec de séparation (22) selon l'une des revendications 1 à 9,
le procédé comprenant une étape (a) détection (100) d'une présence de givre,
et une étape (b) injection (102) d'un fluide dégivrant (44) selon une direction d'injection (46) le long du bord d'attaque (36) de l'aube (26) afin de le dégivrer.

## Patentansprüche

1. Enteisungs-Teilernase (22) einer axialen Turbomaschine (2), wobei die Nase eine Symmetrieachse aufweist, insbesondere Enteisungs-Teilernase (22) eines Kompressors (4) einer axialen Turbomaschine (2), wobei die Teilernase (22) Folgendes umfasst:
eine Schaufel (26) mit einer Vorderkante (36), die sich radial erstreckt, wobei die Vorderkante eine mittlere Linie aufweist, und
ein Enteisungssystem (28) mit einer Einspritzöffnung (42), die dazu bestimmt ist, ein Enteisungsmittel (44) in einer Einspritzrichtung (46) einzuspritzen,
**dadurch gekennzeichnet, dass**
die Einspritzrichtung (46) der Einspritzöffnung (42) zur Enteisung in einem Winkel zwischen 0° und 10° relativ zur mittleren Linie der Vorderkante (36) der Schaufel (26) zur stromaufwärtigen Richtung geneigt ist.

2. Teilernase (22) nach Anspruch 1, **dadurch gekennzeichnet, dass** der Winkel zwischen 0° und 3° liegt.

3. Teilernase (22) nach einem der Ansprüche 1 bis 2, **dadurch gekennzeichnet, dass** die Vorderkante (36) ein äußeres Ende aufweist, wobei die Einspritzrichtung (46) im Wesentlichen parallel zur Vorderkante (36) an der radialen Position des äußeren Endes verläuft.

4. Teilernase (22) nach einem der Ansprüche 1 bis 3, **dadurch gekennzeichnet, dass** das Enteisungssystem (28) so ausgelegt ist, dass die Enteisungsflüssigkeit (44) diskontinuierlich eingespritzt wird.

5. Teilernase (22) nach einem der Ansprüche 1 bis 4, **dadurch gekennzeichnet, dass** das Enteisungssystem (28) dazu ausgelegt ist, die Temperatur der Enteisungsflüssigkeit (44) einzustellen.

6. Teilernase (22) nach einem der Ansprüche 1 bis 5, **dadurch gekennzeichnet, dass** das Enteisungssystem (28) dazu ausgelegt ist, den Versorgungsdruck der Enteisungsflüssigkeit (44) einzustellen und/oder eine Pumpe, insbesondere eine zusätzliche Pumpe (50) zur Erhöhung des Einspritzdrucks der Enteisungsflüssigkeit (44), umfasst.

7. Teilernase (22) nach einem der Ansprüche 1 bis 6, **dadurch gekennzeichnet, dass** das Enteisungssystem (28) mindestens ein Ventil (48) umfasst, das die Zufuhr der Enteisungsflüssigkeit (44) durch die Einspritzöffnung (42) steuert.

8. Teilernase (22) nach einem der Ansprüche 1 bis 7, **dadurch gekennzeichnet, dass** sie eine Wand (32) mit einer radialen Überdicke (56) aufweist, in der die Einspritzöffnung (42) ausgebildet ist.

9. Teilernase (22) nach einem der Ansprüche 1 bis 8, **dadurch gekennzeichnet, dass** das System (28) ein Eisdetektionsmodul an der Vorderkante (36) aufweist, wobei das System (28) so ausgelegt ist, dass es Enteisungsflüssigkeit (44) zuführt, wenn Eis an der Vorderkante (36) detektiert wird.

10. Turbomaschine (2) mit einer Enteisungs-Teilernase (22), **dadurch gekennzeichnet, dass** die Enteisungs-Teilernase (22) einem der Ansprüche 1 bis 9 entspricht und die Turbomaschine (2) vorzugsweise ein Turbostrahltriebwerk mit einem Mantelpropeller (16) und/oder einem offenen Propeller ist.

11. Turbomaschine (2) nach Anspruch 10, **dadurch gekennzeichnet, dass** die Einspritzrichtung (46) senkrecht zur Rotationsachse (14) der Turbomaschine (2) verläuft.

12. Turbomaschine (2) nach Anspruch 10 oder 11, **dadurch gekennzeichnet, dass** die Vorderkante (36) im Wesentlichen in Bezug auf die radiale Richtung geneigt ist, beispielsweise in einer Ebene senkrecht zur Rotationsachse (14) und/oder in einer Ebene mit der Rotationsachse (14).

13. Turbomaschine (2) nach einem der Ansprüche 10 bis 12, **dadurch gekennzeichnet, dass** sie eine ringförmige Anordnung von Schaufeln (26) aufweist, von denen jede eine Vorderkante (36) aufweist, wobei das Enteisungssystem (28) eine ringförmige Anordnung von Einspritzöffnungen (42) zum Einspritzen von Enteisungsflüssigkeit (44) in einer jeweiligen Einspritzrichtung (46) aufweist, wobei jede Einspritzöffnung (42) einer Vorderkante (36) zugeordnet ist, die parallel zur jeweiligen Einspritzrichtung (46) verläuft, um diese zu enteisen.

14. Turbomaschine (2) nach einem der Ansprüche 10 bis 13, **dadurch gekennzeichnet, dass** sie einen vorgeschalteten Kompressor, insbesondere einen Niederdruck-Kompressor (4), aufweist, wobei der Kompressor (4) einen durch die Enteisungs-Teilernase (22) gebildeten Eingang aufweist.

15. Verfahren zur Enteisung einer Teilernase (22) nach einem der Ansprüche 1 bis 9, wobei das Verfahren einen Schritt (a) der Erfassung (100) des Vorhandenseins von Eis und einen Schritt (b) der Einspritzung (102) von Enteisungsflüssigkeit (44) in einer Einspritzrichtung (46) entlang der Vorderkante (36) der Schaufel (26) umfasst, um diese zu enteisen.

## Claims

1. De-icing splitter nose (22) of an axial turbomachine (2), the nose having an axis of symmetry, notably a de-icing splitter nose (22) of a compressor (4) of an axial turbomachine (2), the splitter nose (22) comprising:
a vane (26) with a leading edge (36) that extends radially, the leading edge having a mean line, and
a de-icing system (28) with an injection orifice (42) designed to inject a de-icing fluid (44) in an injection direction (46),
**characterized in that**
the injection direction (46) of the injection orifice (42) is inclined towards the upstream direction of an angle comprised between 0° and 10° relative to the mean line of the leading edge (36) of the vane (26) in order to de-ice it.

2. Splitter nose (22) according to claim 1, **characterized in that** the angle is comprised between 0° and 3°.

3. Splitter nose (22) according to one of claims 1 to 2, **characterized in that** the leading edge (36) comprises an external end, the injection direction (46) being substantially parallel to the leading edge (36) at the radial position of the external end.

4. Splitter nose (22) according to one of claims 1 to 3, **characterized in that** the de-icing system (28) is designed to inject the de-icing fluid (44) discontinuously.

5. Splitter nose (22) according to one of claims 1 to 4, **characterized in that** the de-icing system (28) is designed to adjust the temperature of the de-icing fluid (44).

6. Splitter nose (22) according to one of claims 1 to 5, **characterized in that** the de-icing system (28) is designed to adjust the supply pressure of the de-icing fluid (44) and/or comprises a pump, notably an additional pump (50) to increase the injection pressure of the de-icing fluid (44).

7. Splitter nose (22) according to one of claims 1 to 6, **characterized in that** the de-icing system (28) includes at least one valve (48) controlling the supply of the de-icing fluid (44) through the injection orifice (42).

8. Splitter nose (22) according to one of claims 1 to 7, **characterized in that** it includes a wall (32) with a radial overthickness (56) in which the injection orifice (42) is formed.

9. Splitter nose (22) according to one of claims 1 to 8, **characterized in that** the system (28) has an ice detection module at the leading edge (36), the system (28) being designed to supply de-icing fluid (44) if ice is detected at the leading edge (36).

10. Turbomachine (2) including a de-icing splitter nose (22), **characterized in that** the de-icing splitter nose (22) is according to any of claims 1 to 9, and the turbomachine (2) is preferably a turbo-jet engine with a ducted fan (16) and/or an open fan.

11. Turbomachine (2) according to Claim 10, **characterized in that** the injection direction (46) is perpendicular to the axis of rotation (14) of the turbomachine (2).

12. Turbomachine (2) according to claim 10 or 11, **characterized in that** the leading edge (36) is substantially inclined in relation to the radial direction, for example in a plane perpendicular to the axis of rotation (14) and/or in a plane containing the axis of rotation (14).

13. Turbomachine (2) according to any of claims 10 to 12, **characterized in that** it includes an annular row of vanes (26) each of which having a leading edge (36), the de-icing system (28) having an annular row of injection orifices (42) for injecting de-icing fluid (44) in a respective injection direction (46), each injection orifice (42) being associated with a leading edge (36) that is parallel to the respective injection direction (46) so as to de-ice it.

14. Turbomachine (2) according to any of claims 10 to 13, **characterized in that** it includes an upstream compressor, notably a low-pressure compressor (4), said compressor (4) including an inlet formed by the de-icing splitter nose (22).

15. Method for de-icing a separation nose (22) according to any of claims 1 to 9, the method comprising a step (a) of detection (100) of the presence of ice, and a step (b) of injection (102) of de-icing fluid (44) in an injection direction (46) along the leading edge (36) of the vane (26) so as to de-ice it.
